Europäisches Patentamt

European Patent Office

Office européen des brevets

(19)

(11) Veröffentlichungsnummer: **0 269 892 B1**

(12) **EUROPÄISCHE PATENTSCHRIFT**

(45) Veröffentlichungstag der Patentschrift: **20.03.91**

(51) Int. Cl.⁵: **A47J 39/02**, F24C 15/00, F24C 1/10

(21) Anmeldenummer: 87116187.3

(22) Anmeldetag: 03.11.87

(54) Vorrichtung zum Warmhalten, insbesondere von Speisen.

(30) Priorität: 14.11.86 DE 3639071
14.11.86 DE 8630619 U
31.12.86 DE 8634903 U

(43) Veröffentlichungstag der Anmeldung:
08.06.88 Patentblatt 88/23

(45) Bekanntmachung des Hinweises auf die
Patenterteilung:
20.03.91 Patentblatt 91/12

(84) Benannte Vertragsstaaten:
AT BE CH DE ES FR GB GR IT LI LU NL SE

(56) Entgegenhaltungen:
DE-A- 3 202 012
DE-B- 1 271 338
GB-A- 552 016

(73) Patentinhaber: **Eisfink Carl Fink GmbH & Co.**
**Postfach 106 Schwieberdinger Strasse 94**
**W-7140 Ludwigsburg(DE)**

(72) Erfinder: **Frank, Friedhelm**
**Brühlstrasse 27**
**W-7500 Karlsruhe 41(DE)**

(74) Vertreter: **Menges, Rolf, Dipl.-Ing.**
**Patentanwalt Erhardtstrasse 12**
**W-8000 München 5(DE)**

## Beschreibung

Die Erfindung betrifft eine Vorrichtung der im Oberbegriff des Anspruchs 1 angegebenen Art.

Zum Warmhalten von Speisen werden Wärmestrahler eingesetzt, die die Speisen üblicherweise von oben her mit Wärmestrahlung beaufschlagen. Solche Wärmestrahler bestehen aus im wesentlichen punktförmigen Wärmequellen oder aus langgestreckten Wärmequellen, z.B. Quarzheizröhren, die in einem Gehäuse angeordnet und von einem Reflektor umgeben sind. Die warmzuhaltenden Speisen dürfen aber trotz der auf sie einwirkenden Wärmestrahlung nicht austrocknen. Im Stand der Technik werden deshalb für die Speisen ringsum geschlossene Schaukästen benutzt, um die Speisen in einer Umgebung hoher Luftfeuchtigkeit zu halten. Das ist nicht nur aufwendig, sondern hat den weiteren Nachteil, daß das Aroma der Speisen ausgeschwemmt wird. Würde zur Vermeidung dieses Nachteil ohne einen geschlossenen Schaukasten od.dgl. gearbeitet werden, würden die Speisen austrocknen und verkrusten. Dieses Austrocknen und Verkrusten würde darüber hinaus auch noch ungleichmäßig erfolgen, weil die Temperatureinwirkung auf die Speisen unmittelbar unterhalb des Wärmestrahlers am stärksten ist.

Bei einem bekannten Speisenwarmhaltegerät (DE-A-30 09 555), ist der Hohlraum des Gehäuses als ein eine Heizung aufweisender, verschließbarer und in verschlossenem Zustand druckloser Speisenwarmhalteraum ausgebildet, der eine Dampfquelle sowie eine Entlüftungsöffnung aufweist. Als Dampfquelle ist im unteren Teil des Speisenwarmhalteraums ein Dampferzeuger angeordnet. Der Dampferzeuger besteht aus einem Wassersumpf und einer elektrischen Heizung. Zur Bildung des Wassersumpfes bildet der Boden des Speisenwarmhalteraums ein nach innen und nach unten vertieft ausgebildetes Becken mit einem verschließbaren Wasserablaufstutzen. Über der oberhalb des Wassersumpfes vorgesehenen Heizung des Speisenwarmhalteraums ist ein Dampfabweiser angeordnet, aufgrund dessen der Dampf im wesentlichen an den wärmeisolierten Wänden des Speisenwarmhalteraums aufsteigt. Im Speisenwarmhalteraum sind mehrere Speisenbehälter-Aufnahmevorrichtungen im Abstand übereinander angeordnet. Dieses bekannte Gerät entspricht daher den weiter oben erwähnten bekannten Geräten, bei denen ein aufwendiger Schaukasten benutzt wird, um die Speisen in einer Umgebung hoher Luftfeuchtigkeit zu halten.

Weiter ist es bekannt (DE-C-27 31 191 und 32 08 874), zur Wärmebehandlung von Nahrungsmitteln, die sich in einem Garraum befinden, ein Dampf-Luft-Gemisch in den Garraum einzuleiten, in welchem sich ein Nahrungsmittel befindet. Auch in diesen Fällen ist es also erforderlich, einen geschlossenen Garraum vorzusehen, um Nahrungsmittel beim Garen in einer Umgebung hoher Luftfeuchtigkeit zu halten.

Die DE-A-3 202 012 beschreibt eine Vorrichtung, bei der mit Dampf zu beaufschlagende Waren, z.B. Speisen, in einen geschlossenen Raum gestellt werden. Der Dampf wird dabei in einem Raum unterhalb der Waren erzeugt, steigt dann nach oben und gelangt um die Waren. In der DE-A-3 202 012 ist zwar angegeben, daß die Befeuchtung der Waren bei einer nichtperforierten Warenauflagefläche auch von oben erfolgen kann, in diesem Fall ist dann jedoch ein Verteilungssystem in Form von Ringleitungen mit Ausblasschlitzen, -düsen od.dgl. erforderlich und kein Wärmestrahler über den Waren vorhanden.

Eine Vorrichtung der im Oberbegriff des Patentanspruchs 1 angegebenen Art ist aus der GB-A-552 016 bekannt. Mit der bekannten Vorrichtung lassen sich Nahrungsmittel durch Behandlung mit Wasserdampf kochen, indem sie auf Siedetemperatur gebracht werden, ohne daß ihnen Feuchtigkeit entzogen wird, oder ohne Entzug von Feuchtigkeit auf eine bestimmte Temperatur bringen, bevor sie endgültig getrocknet oder geröstet werden. In allen diesen Fällen werden durch die Vorrichtung die Nahrungsmittel mit Strahlen heißen Dampfes beaufschlagt, die aus Dampfdüsen abgegeben werden. Die Speisen können sich bei der Dampfbeaufschlagung entweder auf einem Tablett innerhalb einer Kochkammer oder auf einer Rutsche außerhalb einer Kammer befinden. Der benötigte Dampf wird über eine Rohrleitung aus einem separaten Dampferzeuger von außen zugeführt, gegebenenfalls unter Zuhilfenahme eines Gebläses. Die bekannte Vorrichtung kommt somit zwar ohne einen geschlossenen Garraum aus, es ist jedoch stets der separate Dampferzeuger erforderlich. Das ist aufwendig und überdies mit Energieverlusten verbunden.

Vorrichtungen der oben genannten Art, die zum Bestrahlen von Pflanzen, Zimmerkulturen, Hydrokulturen usw. benutzt werden, sollten keine zu starke Wärmeeinwirkung hervorrufen, weil Pflanzen sonst durch Wasserabgabe eine Kühlwirkung zu erzeugen versuchen würden. Eine gleichmäßigere Verteilung der abgestrahlten Wärme unter gleichzeitiger Befeuchtung der Pflanzen und ohne das Erfordernis eines geschlossenen Raumes, in welchem die Pflanzen usw. untergebracht werden müssen, wäre daher auch in diesen Fällen vorteilhaft.

Aufgabe der Erfindung ist es, eine Vorrichtung der im Oberbegriff des Anspruchs 1 angegebenen Art so auszubilden, daß sich warmzuhaltendes Gut auf einfachere Weise warm und gleichzeitig ausreichend feucht halten läßt, ohne daß ein separater Dampferzeuger erforderlich ist oder sich das Gut in einem geschlossenen Raum befinden muß. Diese Aufgabe ist erfindungsgemäß durch die im kennzeichnenden Teil des Anspruchs 1 angegebenen Merkmale gelöst.

Die Vorrichtung nach der Erfindung gibt über die Dampfauslässe Dampf ab, mit welchem unterhalb der Vorrichtung aufgestellte Speisen direkt beaufschlagt werden. Die Abgabe des Dampfes erfolgt dabei über der Länge der Vorrichtung gleichmäßig, so daß mittels des Dampfes den Speisen diffuse Wärme zugeführt wird und unter der Vorrichtung sowohl eine gleichmäßige Temperaturverteilung als auch eine ausreichende Luftfeuchtigkeit erzielt werden, die das Ausschwemmen des Aromas der Speisen verhindern. Ohne daß ein geschlossener Raum um das warmzuhaltende Gut vorhanden ist, läßt sich dessen Entfeuchtung auf einfache Weise vermeiden. Bei warmzuhaltenden Pflanzen od.dgl. hat das den Vorteil, daß diese keinen wachstumshemmenden Feuchtigkeitsverlust erleiden.

Der nach Bedarf warme oder heiße Dampf wird erfindungs gemäß in der Vorrichtung selbst erzeugt. Die Vorrichtung nach der Erfindung ist daher weniger aufwendig und hat geringere Wärmeverluste, da sie ein en Wärmestrahler mit einer speziellen Wärmequelle und einem speziellen Reflektor aufweist, um den Dampf innerhalb der Vorrichtung selbst zu erzeugen. Da stets nur ein dünner Wasserfilm an der Reflektorinnenseite herunterläuft, wirkt der Reflektor an seiner Innenseite als Filmverdampfer. Das hat außerdem den Vorteil, daß dem Reflektor ständig Wärme entzogen wird, wodurch dessen Lebensdauer und die der Wärmequelle verlängert werden, weil es innerhalb des Reflektors zu keinem Hitzestau kommen kann.

Vorteilhafte Ausgestaltungen der Erfindung bilden die Gegenstände der Unter ansprüche.

In der Ausgestaltung der Erfindung nach Anspruch 3 beaufschlagt die Vorrichtung aufgrund ihres Reflektors unterhalb desselben einen Bereich mit diffuser Wärmestrahlung, der wesentlich größer als die projizierte Fläche der Vorrichtung ist, wodurch überall eine besonders gleichmäßige Temperaturverteilung erzielt wird.

In der Ausgestaltung der Erfindung nach Anspruch 4 wird die Dampfverteilleitung durch die von der Wärmequelle gelieferte Wärmeenergie auf so hoher Temperatur gehalten, daß auch unter ungünstigen Umgebungsbedingungen aus den Dampfdüsen stets nur Dampf und kein Wasser austritt.

In der Ausgestaltung der Erfindung nach Anspruch 7 läßt sich die Dosiereinrichtung so einstellen, daß der Hohlraum zwischen Reflektorinnenseite und Gehäuseinnenseite nicht mit Was-ser gefüllt wird.

Ein Ausführungsbeispiel der Erfindung wird im folgenden unter Bezugnahme auf die Zeichnungen näher beschrieben. Es zeigt

Fig. 1 in Seitenansicht die Vorrichtung nach der Erfindung,

Fig. 2 die Vorrichtung nach Fig. 1 in Draufsicht, und

Fig. 3 die Vorrichtung nach Fig. 1 im Querschnitt.

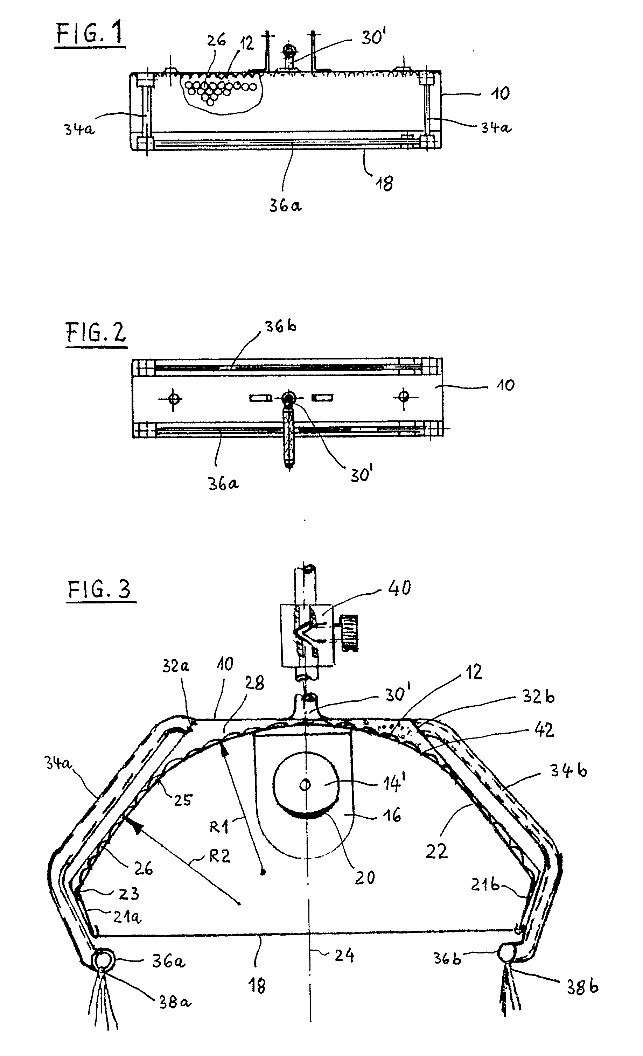

Die Fig. 1 bis 3 zeigen eine langgestreckte Vorrichtung zum Abstrahlen von Dampf, die im folgenden am Beispiel des Warmhaltens von Speisen beschrieben wird, genauso gut aber zum Bestrahlen von Pflanzen od.dgl. benutzt werden könnte. Die Vorrichtung ist oberhalb der warmzuhaltenden Speisen angeordnet, die sie mit Dampf beaufschlagt

Bei der in den Fig. 1 bis 3 dargestellten Ausführungsform hat das Gehäuse 10 im Querschnitt eine doppelte Trapezform. Das Gehäuse 10 trägt innen einen Reflektor 12, der die Innenwand des Gehäuses bildet. Der Reflektor 12 umgibt eine Wärmequelle 14', die an ihren Enden durch zwei Halter 16 befestigt ist, von denen einer in Fig. 3 sichtbar ist. Die Wärmequelle 14' ist auf ihrer der Reflektoröffnung 18 zugewandten Seite mit einer Strahlungsabschirmung 20 versehen. Die Wärmequelle 14' kann eine Quarzheizröhre sein, in welchem Fall die Strahlungsabschirmung aus einer wärmestrahlungsundurchlässigen Beschichtung der Heizröhre bestehen würde.

Der Reflektor 12 ist auf seiner der Wärmequelle 14' zugewandten. Außen seite 22 im Querschnitt auf jeder Seite seiner Mittelebene 24 mit wenigstens zwei unterschiedlichen Krümmungsradien R1 und R2 versehen und bezüglich seiner Mittelebene 24 spiegelbildlich symmetrisch ausgebildet. Gemäß der Darstellung in Fig. 3 reicht der mit dem Krümmungsradius R2 versehene Teil der Reflektoraußenseite 22 nach unten hin bis zu einer Stelle 23, wo das in der Höhe kleinere Trapez beginnt, und nach oben hin bis zu einer Übergangsstelle 25 auf den Radius R1. Der mit dem Radius R1 versehene Teil der Außen seite 22 des Reflektors 12 reicht von der Übergangsstelle 25 zwischen den Krümmungsradien R1 und R2 einerseits bis zur Mittelebene 24 andererseits. In der Außen seite 22 des Reflektors 12 ist im Bereich der Krümmungsradien R1 und R2 eine Vielzahl von aneinandergrenzenden, konkaven, sphärischen Fresnel-Spiegeln 26 gebildet. Der Reflektor besteht z.B. aus Edelstahl oder hartvernickeltem Kupferblech. Vor dem Hartvernicke des Kupferblechs werden in dieses die Fresnel-Spiegel 26 eingedrückt. Alle Fresnel-Spiegel 26 haben den gleichen Durchmesser. Da benachbarte Fresnel-Spiegel 26 immer auf wenigstens einem Krümmungsradius liegen, sind zwei benachbarte Fresnel-Spiegel 26 jeweils gegeneinander geneigt. Der Reflektor 12 strahlt deshalb über seine Öffnung 18 eine gleichmäßig diffuse Wärmestrahlung ab, die unterhalb der Vorrichtung keine ungleichmäßige Temperaturverteilung zuläßt.

Der Reflektor ist mit Abstand von dem Gehäuse 10 angeordnet, so daß zwischen beiden der geschlossene Hohlraum 28 gebildet ist. Der Hohlraum 28 hat einen Wasserzufuhranschluß 30' und Dampfauslässe 32 in Form von wenigstens zwei Dampfauslaßöffnungen 32a, 32b auf der einen bzw. anderen Längsseite des Hohlraums 28 am oberen Ende des Gehäuses 10. Von den Dampfauslaßöffnungen 32a, 32b führen Verbindungsleitungen 34a bzw. 34b zu zwei auf den Längsseiten des Gehäuses 10 außen angeordneten Dampfverteilleitungen 36a, 36b, welche an ihrer Unterseite jeweils mit den Dampfdüsen 38a bzw. 38b versehen sind. In dem dargestellten Ausführungsbeispiel sind die Dampfverteilleitungen 36a, 36b so weit nach innen gezogen, daß sie in die Reflektoröffnung 18 hineinragen.

Der Wasserzufuhranschluß 30' ist mit einer Dosiereinrichtung 40 versehen, mittels welcher die Wasserzufuhr so drosselbar ist, daß auf der Innenseite 42 des Reflektors 12 ein dünner Wasserfilm erzeugbar ist. Die Dosiereinrichtung 40 kann irgendeine beliebige Drosseleinrichtung sein, die im dargestellten Ausführungsbeispiel manuell einstellbar ist. Die Dosiereinrichtung 40 wird so eingestellt, daß nur soviel Wasser zufließt, wie auf der Innenseite 42 des Reflektors 12 verdampfen kann.

Im Betrieb der in den Fig. 1 bis 3 dargestellten Vorrichtung werden warmzuhaltende Speisen großflächig und gleichmäßig mit Wärme bestrahlt, ohne daß die Speisen austrocknen oder verkrusten können, da zusätzlich zu der gleichmäßigen Bestrahlung mit Wärme die Speisen ständig mit Dampf beaufschlagt werden. "Großflächig" bedeutet, daß die bestrahlte Fläche wesentlich größer als die projizierte Grundfläche der Vorrichtung ist. Innerhalb dieser bestrahlten Fläche sind keine nennenswerten Unterschiede in der Temperatur der Wärmeabstrahlung feststellbar, im Gegensatz zum Stand der Technik, wo die bestrahlte Fläche unterhalb der Wärmequelle am heißesten ist und die bestrahlte Fläche insgesamt kaum größer als die projizierte Grundfläche der Vorrichtung ist.

Die Reflektoraußenseite 22 ist in den den Schmalseiten des kleinen Trapezes entsprechenden Bereichen 21a, 21b plan belassen, d.h. nicht mit Fresnel-Spiegeln 26 versehen worden. Die darunter in die Reflektoröffnung 18 hineinragenden Dampfverteilleitungen 36a, 36b werden durch die Wärmestrahlung mit erhitzt, so daß auch unter ungünstigen Dampfbildungsbedingungen (große Baugröße der Vorrichtung, niedrige Umgebungstemperatur usw.) in den Dampfverteilleitungen 36a, 36b keine Kondensation erfolgt und aus den Dampfdüsen 38a, 38b stets Wasserdampf und kein Wasser austritt. Der bei dem hier beschriebenen Wärmestrahler erzielte große Wärmeabstrahlwinkel von ca. 150° wird durch diese Anordnung der Dampfverteilleitungen 36a, 36b nicht beeinträchtigt.

Der Vorrichtung wird also lediglich Wasser zugeführt, und durch die Wärmequelle 14' wird einerseits Wärme erzeugt, mit der die unter der Vorrichtung angeordneten Speisen direkt beaufschlagt werden, und andererseits Wärme, mit der das Wasser in Dampf verwandelt wird, mit welchem die Speisen zusätzlich beaufschlagt werden.

## Ansprüche

1. Vorrichtung zum Warmhalten insbesondere von Speisen, mit einem Gehäuse (10) mit einer äußeren und einer inneren Wand (12, 13), zwischen denen sich ein Hohlraum (28) zur Aufnahme von Dampf befindet, der Dampfauslässe (32) aufweist, die an der Unterseite des Gehäuses (10) münden, **dadurch gekennzeichnet,** daß ein Reflektor die Innenwand (12) des Gehäuses (10) bildet und teilweise eine Wärmequelle (14') umgibt und daß der Hohlraum (28) einen Wasserzufuhranschluß (30') aufweist, der derart angeordnet und gestaltet ist, daß auf der Innenseite des Reflektors ein dünner Wasserfilm erzeugbar ist, wobei nur so viel Wasser zufließt, wie auf der Innenseite des Reflektors verdampfen kann.

2. Vorrichtung nach Anspruch 1, dadurch gekennzeichnet, daß von den Dampfauslässen (32) Verbindungsleitungen (34a, 34b) zu Dampfdüsen (38a, 38b) führen, die an der Unterseite des Gehäuses (10) münden.

3. Vorrichtung nach den Ansprüchen 1 und 2, dadurch gekennzeichnet, daß die Wärmequelle (14') teilweise mit einer Strahlungsabschirmung (20) versehen ist, daß der Reflektor (12) auf seiner der Wärmequelle (14') zugewandten Außenseite (22) im Querschnitt auf jeder Seite seiner Mittelebene (24) wenigstens zwei unterschiedliche Krümmungsradien (R1, R2) aufweist und bezüglich seiner Mittelebene (24) spiegelbildlich symmetrisch ausgebildet ist und aus einer Vielzahl von aneinandergrenzenden, konkaven, sphärischen Fresnel-Spiegeln (26) besteht, daß die Wärmequelle (14') die Strahlungsabschirmung (20) auf ihrer der Reflektoröffnung (18) zugewandten Seite aufweist und daß die Dampfdüsen (38a, 38b) benachbart zur Reflektoröffnung (18) angeordnet sind.

4. Vorrichtung nach Anspruch 3, dadurch gekennzeichnet, daß die Dampfdüsen (38a, 38b) Austrittsöffnungen wenigstens einer Dampfverteilleitung (36a, 36b) sind, die am Rand der Reflektoröffnung (18) in diese hineinragen.

5. Vorrichtung nach einem der Ansprüche 1 bis 3, dadurch gekennzeichnet, daß der Reflektor (12) aus hartvernickeltem Kupferblech besteht.

6. Vorrichtung nach einem der Ansprüche 1 bis 4, dadurch gekennzeichnet, daß der Reflektor (12) aus Edelstahl besteht.

7. Vorrichtung nach einem der Ansprüche 1 bis 6, dadurch gekennzeichnet, daß der Wasserzufuhranschluß (30') oberhalb des Reflektors (12) angeordnet und mit einer Dosiereinrichtung (40) versehen ist, mittels welcher die Wasserzufuhr so drosselbar ist, daß auf der Innenseite (42) des Reflektors (12) der dünne Wasserfilm erzeugbar ist.

## Claims

1. Device for heat retention, especially for food, comprising a housing (10) having an outer and an inner wall (12, 13) between which a cavity (28) for accommodating vapour is disposed and comprises vapour outlets (32) which open out at the lower side of the housing (10), characterized in that a reflector forms the inner wall (12) of the housing (10) and partially surrounds a heat source (14') and that the cavity (28) comprises a water supply connection (30') which is arranged and configured in such a manner that on the inner side of the reflector a thin water film can be formed, the amount of water being supplied being only as much as can evaporate on the inner side of the reflector.

2. Device according to claim 1, characterized in that from the vapour outlets (32) connection conduits (34a, 34b) lead to vapour nozzles (38a, 38b) which open out at the lower side of the housing (10).

3. Device according to claims 1 and 2, characterized in that the heat source (14') is provided partially with a radiation shield (20), that the reflector (12) on its outer side (22) facing the heat source (14') comprises in crosssection on each side of its centre plane (24) at least two different radii (R1, R2) of curvature and with respect to its centre plane (24) is made symmetrically laterally inverted and consists of a plurality of contiguous concave spherical Fresnel mirrors (26), that the heat source (14') has the radiation shield (20) on its side facing the reflector opening (18) and that the vapour nozzles (38a, 38b) are arranged adjacent the reflector opening (18).

4. Device according to claim 3, characterized in that the vapour nozzles (38a, 38b) are outlet openings of at least one vapour distributing conduit (36a, 36b) which at the edge of the reflector opening (18) penetrate into the latter.

5. Device according to any one of claims 1 to 3, characterized in that the reflector (12) consists of hard nickelplated copper sheet.

6. Device according to any one of claims 1 to 4, characterized in that the reflector (12) consists of special steel.

7. Device according to any one of claims 1 to 6, characterized in that the water supply connection (30') is arranged above the reflector (12) and is provided with a metering means (40) by which the water supply can be throttled in such a manner that the thin water film can be formed on the inner side (42) of the reflector (12).

## Revendications

1. Dispositif pour maintenir au chaud, notamment des aliments, comprenant un corps (10) qui présente une paroi extérieure et une paroi intérieure (12, 13) entre lesquelles se trouve une cavité (28) destinée à recevoir de la vapeur, qui présente des somes de vapeur (32) débouchant au niveau de la face inférieure du corps (10), **caractérisé en ce qu'**un réflecteur forme la paroi intérieure (12) du corps (10) et entoure partiellement une source de chaleur (14'), **et en ce que** la cavité (28) présente un raccord d'amenée d'eau (30') qui est disposé et conformé de manière qu'il puisse se former une pellicule d'eau sur la face intérieure du réflecteur, la quantité d'eau arrivant étant limitée à celle qui peut être vaporisée sur la face intérieure du réflecteur.

2. Dispositif selon la Revendication 1, **caractérisé en ce que** des conduites de liaison (34a, 34b) conduisent des sorties de vapeur (32) à des buses de vapeur (38a, 38b) qui débouchent au niveau de la face inférieure du corps (10).

3. Dispositif selon les Revendications 1 et 2, **ca-**

ractérisé **en ce que** la source de chaleur (14'), est munie partiellement d'un écran de rayonnement (20), **en ce que,** sur sa face extérieure (22) dirigée vers la source de chaleur (14'), le réflecteur (12) présente, au moins deux rayons de courbure différents (R1, R2) de chaque côté de son plan médian (24), en section transversale, est de conformation symétrique par rapport à son plan médian (24) et est composé d'un grand nombre de miroirs de Fresnel (26) concaves, sphériques, adjacents entre eux, **en ce que** la source de chaleur (14') présente son écran de rayonnement (20) sur sa face dirigée vers l'ouverture (18) du réflecteur et **en ce que** les buses de vapeur (38a, 38b) sont disposées à proximité de l'ouverture (18) du réflecteur.

4. Dispositif selon la Revendication 3, **caractérisé en ce que** les buses de vapeur (38a, 38b) sont des ouvertures de sortie d'au moins une conduite (36a, 36b) de distribution de vapeur, qui est engagée dans les limites de l'ouverture (18) du réflecteur, au droit du bord de cette ouverture.

5. Dispositif selon l'une des Revendications 1 à 3, **caractérisé en ce que** le réflecteur (12) est composé de tôles de cuivre nickelé dur.

6. Dispositif selon l'une des Revendications 1 à 4, **caractérisé en ce que** le réflecteur (12) est fait d'acier spécial.

7. Dispositif selon l'une des Revendications 1 à 6, **caractérisé en ce que** le raccord d'arrivée d'eau (30') est disposé au-dessus du réflecteur (12) et muni d'un dispositif de dosage (40) au moyen duquel l'arrivée d'eau peut être étranglée de telle façon que la mince pellicule d'eau puisse se former sur la face intérieure (42) du réflecteur (12).

FIG.1

FIG.2

FIG.3